Europäisches Patentamt

European Patent Office

Office européen des brevets

(19)

(11) Publication number: **0 450 422 A2**

## EUROPEAN PATENT APPLICATION

(12)

(21) Application number: **91104489.9**

(22) Date of filing: **22.03.91**

(51) Int. Cl.⁵: **C08J 9/14**, //C08L75:04

(30) Priority: **06.04.90 US 505813**
**06.04.90 US 505867**
**06.04.90 US 505866**
**06.04.90 US 505759**
**06.04.90 US 505817**
**06.04.90 US 505864**
**06.04.90 US 505791**

(43) Date of publication of application:
**09.10.91 Bulletin 91/41**

(84) Designated Contracting States:
**AT BE CH DE DK ES FR GB IT LI NL SE**

(71) Applicant: **MOBAY CORPORATION**
**Mobay Road**
**Pittsburgh Pennsylvania 15205(US)**

(72) Inventor: **Doerge, Herman P.**
**9332 Timber Trail**
**Pittsburgh, PA 15237(US)**
Inventor: **Spitler, Keith G.**
**Box 48L, R.D. No. 2**
**Burgettstown, PA 15021(US)**
Inventor: **Mortimer, Charles E.**
**1122 Park Street**
**Tarentum, PA 15084(US)**

(74) Representative: **Müller, Gerhard, Dr. et al**
**BAYER AG Konzernverwaltung RP**
**Patentabteilung**
**W-5090 Leverkusen 1 Bayerwerk(DE)**

(54) **Rigid foams using blends of chlorofluorocarbons and hydrocarbons as blowing agent.**

(57) The present invention is directed to the use of a mixture of specific chlorofluorocarbons and methyl formate or specific hydrocarbons in the production of rigid, closed cell foams.

EP 0 450 422 A2

BACKGROUND OF THE INVENTION

The use of trichloromonofluoromethane ("CFC-11") in the production of closed cell, rigid polyurethane and polyisocyanurate foams is well known (see, e.g., U.S. Patents 3,072,582; 3,091,551; 3,153,002; 3,524,825; 3,846,347; and 4,248,975). Recently, the urethane foam industry has been investigating methods for reducing the amount of CFC-11 used in producing rigid foams.

U.S. Patent 3,745,203 describes the production of polyurethane moldings using a mixture of two volatile blowing agents. The least volatile of the blowing agents has a boiling point of from 30° F to 120° F, while the more volatile blowing agent in the mixture has a boiling point of from -50° F to 500° F. The difference between the boiling points of the two blowing agents in the mixture is from 30° F to 150° F.

German Auslegeschrift 1,288,312 describes the use of an azeotrope of CFC-11 and isopentane as a blowing agent (U.S. Patent 3,249,546 describes the azeotrope itself).

U.S. Patent 4,055,521 describes a blowing agent which is a mixture of CFC-11, isopentane, and methylene chloride.

U.S. Patent 3,391,093 describes the use of halogenated blowing agents which generally have boiling points below about 80° F for producing polyurethane foams. The reference does indicate that low molecular weight hydrocarbon gases can be used with the halogenated blowing agents. U.S. Patent 4,795,763 broadly indicates that mixtures of halohydrocarbons and hydrocarbons can be used as blowing agents for polyurethane foams.

It has also been suggested that 2,2-dichloro-1,1,1-trifluoroethane ("HCFC-123") and 1,1-dichloro-1-fluoroethane ("HCFC-141b") can be used as blowing agents for rigid polyurethane foams (See, e.g., Dishart et al, "The DuPont Program on Fluorocarbon Alternative Blowing Agents for Polyurethane Foams," POLYURETHANES WORLD CONGRESS 1987-SEPTEMBER 29-OCTOBER 2, 1987, pages 59-66, and U.S. Patent 4,076,644).

The use of a mixture of a chlorofluorocarbon having an atmospheric boiling point of from about 74° F to about 120° F and an alkyl alkanoate having a molecular weight of no more than about 88 as a blowing agent has been described in U.S. application Serial Number 321,032, filed on March 9, 1989. Among the chlorofluorocarbons described are HCFC 123 and HCFC 141b. Among the alkyl alkanoates described is methyl formate.

Finally, various compositions based on halogenated hydrocarbons are known for use as cleaning solvents. For example, U.S. Patent 4,055,507 describes the use of an azeotropic mixture of 1,2-dichloro-1,1-difluoroethane and 3-methylpentane. Japanese 1,141,995 (abstract only) describes an azeotropic mixture of 67 to 87 % by weight of HCFC-123 and 13 to 33 % by weight of 2-methylbutane. Japanese 1,141,996 (abstract only) describes an azeotropic mixture of HCFC-141b and a member selected from the group n-pentane, 2-methyl butane and 2,2-dimethylbutane.

BRIEF DESCRIPTION OF THE DRAWINGS

Figure 1    is a graph showing a plot of the mole fraction of methyl formate in the liquid phase versus the mole fraction of methyl formate in the vapor phase of a mixture with 1,1-dichloro-1-fluoroethane refluxing at steady state at one atmosphere.

Figure 2    is a graph showing a plot of the mole fraction of 2-methylbutane in the liquid phase versus the mole fraction of 2-methyl butane in the vapor phase of a mixture with 2,2-dichloro-1,1,1-trifluoroethane refluxing at steady state at one atmosphere.

Figure 3    is a graph showing a plot of the mole fraction of methyl formate in the liquid phase versus the mole fraction of methyl formate in the vapor phase of a mixture with 2,2-dichloro-1,1,1-trifluoroethane refluxing at steady state at one atmosphere.

Figure 4    is a graph showing a plot of the mole fraction of 2-methylbutane in the liquid phase versus the mole fraction of 2-methyl butane in the vapor phase of a mixture with 1,1-dichloro-1-fluoroethane refluxing at steady state at one atmosphere.

Figure 5    is a graph showing a plot of the mole fraction of n-pentane in the liquid phase versus the mole fraction of n-pentane in the vapor phase of a mixture with 1,1-dichloro-1-fluoroethane refluxing at steady state at one atmosphere.

Figure 6    is a graph showing a plot of the mole fraction of n-pentane in the liquid phase versus the mole fraction of n-pentane in the vapor phase of a mixture with 2,2-dichloro-1,1,1-trifluoroethane refluxing at steady state at one atmosphere.

DESCRIPTION OF THE INVENTION

The present invention is directed to the discovery that various mixtures of specific hydrochlorofluorocarbons with methyl formate or specific hydrocarbons are eminently suitable for the production of closed cell, rigid foams. The resultant foams are substantially lower in density than foams produced from trichloromonofluoromethane alone, yet still have relatively low K-factors. Additionally, since the methyl formate and hydrocarbons will have no ozone depletion potential, the ozone depletion potential of the hydrochlorofluorocarbons used herein will be lowered. More particularly, the present invention is directed to an improved process for the preparation of closed cell rigid foams. The process broadly comprises reacting a) a polyol component having a hydroxyl number of from about 200 to about 650, and b) an organic polyisocyanate, in the presence of c) a catalyst, d) a foam stabilizer, and e) a blowing agent. The improvement resides in the use of a specific mixture as the blowing agent.

One useful mixture consists of i) from 30 to 95 percent by weight, and preferably from 60 to 90 percent by weight, of a hydrochlorofluorocarbon selected from the group consisting of 2,2-dichlor-1,1,1-trifluoroethane (b.p. about 82° F) and 1,1-dichloro-1-fluoroethane (b.p. about 90° F) and ii) from 5 to 70 percent by weight, and preferably from 10 to 40 percent by weight, of a hydrocarbon selected from the group consisting of n-pentane, 2-methyl butane, hexane, the position isomers of hexane and mixtures thereof. The most preferred mixture of this type consists of 2,2-dichloro-1,1,1-trifluoroethane and n-pentane. If desired, the blowing agent can also contain water.

Another useful mixture is an azeotrope-like composition consisting essentially of from 35 to 45 % by weight of methyl formate (b.p. about 32 F) and from 55 to 65 % by weight of 1,1-dichloro-1-fluoroethane. This latter material is known in the nomenclature conventional in the chlorofluorocarbon field as hydrochlorofluorocarbon 141b. The methyl formate used can be of normal commercial purity which typically contains at least 95% methyl formate. The present mixture of 35 to 45% methyl formate and 55 to 65% 141b is azeotropic in nature in that compositions within this range exhibit a substantially constant boiling point. Being substantially constant boiling, the mixture does not tend to fractionate to any great extent upon evaporation. After evaporation, only a small difference exists between the composition of the vapor phase and the composition of the initial liquid phase. This difference is so small that the compositions of the vapor and liquid phases are considered substantially identical. Accordingly, any mixture within the above noted range exhibits properties which are characteristic of a true binary azeotrope. Compositions consisting essentially of from 37 to 42% by weight methyl formate and 58 to 63% by weight of 141b have been found to exhibit particularly satisfactory performance. The composition consisting of 39.6% by weight of methyl formate and 60.4% by weight of 141b has been established, within the accuracy of the boiling point determination procedure, as the true binary azeotrope with a boiling point of about 27.8° C.

Another useful mixture is an azeotrope-like composition consisting essentially of from 30 to 40 % by weight of 2-methyl butane and from 60 to 70 % by weight of 2,2-dichloro-1,1,1-trifluoroethane. This latter material is known in the nomenclature conventional in the chlorofluorocarbon field as hydrochlorofluorocarbon 123. The 2-methylbutane used can be of normal commercial purity which typically contains at least 95% 2-methylbutane. The present mixture of 30 to 40% 2-methylbutane and 60 to 70% 123 is azeotropic in nature in that compositions within this range exhibit a substantially constant boiling point. Being substantially constant boiling, the mixture does not tend to fractionate to any great extent upon evaporation. After evaporation, only a small difference exists between the composition of the vapor phase and the composition of the initial liquid phase. This difference is so small that the compositions of the vapor and liquid phases are considered substantially identical. Accordingly, any mixture within the above noted range exhibits properties which are characteristic of a true binary azeotrope. Compositions consisting essentially of from 32 to 38% by weight 2-methylbutane and 62 to 68% by weight of 123 have been found to exhibit particularly satisfactory performance. The composition consisting of 34.1% by weight of 2-methylbutane and 65.9% by weight of 123 has been established, within the accuracy of the boiling point determination procedure, as the true binary azeotrope with a boiling point of about 23.5° C.

Another useful mixture is an azeotrope-like composition consisting essentially of from 22 to 32 % by weight of methyl formate and from 68 to 78 % by weight of 2,2-dichloro-1,1,1-trifluoroethane. The methyl formate used can be of normal commercial purity which typically contains at least 95% methyl formate. The present mixture of 22 to 32% methyl formate and 68 to 78% 123 are azeotropic in nature in that compositions within this range exhibit a substantially constant boiling point. Being substantially constant boiling, the mixture does not tend to fractionate to any great extent upon evaporation. After evaporation, only a small difference exists between the composition of the vapor phase and the composition of the initial liquid phase. This difference is so small that the compositions of the vapor and liquid phases are considered substantially identical. Accordingly, any mixture within the above noted range exhibits properties which are characteristic of a true binary azeotrope. Compositions consisting essentially of from 25 to 30% by weight methyl formate and 70 to 75% by weight of 123 have been found to exhibit particularly satisfactory performance. The composition consisting of 27.1% by weight of methyl formate and 72.9% by weight of 123 has been established, within the accuracy of the boiling point determination procedure, as the true binary azeotrope with a boiling point of about 32.7° C.

Another useful mixture is an azeotrope-like composition consisting essentially of from 25 to 35 % by weight of 2-methylbutane and from 65 to 75 % by weight of 1,1-dichloro-1-fluoroethane. The 2-methyl butane used can be of normal commercial purity which typically contains at least 95% 2-methylbutane. The present mixture of 25 to 35% 2-methylbutane and 65 to 75% 141b is azeotropic in nature in that compositions within this range exhibit a substantially constant boiling point. Being substantially constant boiling, the mixture does not tend to fractionate to any great extent upon evaporation. After evaporation, only a small difference exists between the composition of the vapor phase and the composition of the initial liquid phase. This difference is so small that the compositions of the vapor and liquid phases are considered substantially identical. Accordingly, any mixture within the above noted range exhibits properties which are characteristic of a true binary azeotrope. Compositions consisting essentially of from 27 to 33% by weight 2-methylbutane and 67 to 73% by weight of 141b have been found to exhibit particularly satisfactory performance. The composition consisting of 30.4% by weight of 2-methylbutane and 69.6% by weight of 141b has been established, within the accuracy of the boiling point determination procedure, as the true binary azeotrope with a boiling point of about 25.7° C.

Another useful mixture is an azeotrope-like composition consisting essentially of from 22 to 32 % by weight of n-pentane and from 68 to 78 % by weight of 1,1-dichloro-1-fluoroethane. The n-pentane used can be of normal commercial purity which typically contains at least 95% n-pentane. The present mixture of 22 to 32% n-pentane and 68 to 78% 141b is azeotropic in nature in that compositions within this range exhibit a substantially constant boiling point. Being substantially constant boiling, the mixture does not tend to fractionate to any great extent upon evaporation. After evaporation, only a small difference exists between the composition of the vapor phase and the composition of the initial liquid phase. This difference is so small that the compositions of the vapor and liquid phases are considered substantially identical. Accordingly, any mixture within the above noted range exhibits properties which are characteristic of a true binary azeotrope. Compositions consisting essentially of from 25 to 30% by weight n-pentane and 70 to 75% by weight of 141b have been found to exhibit particularly satisfactory performance. The composition consisting of 27.4% by weight of n-pentane and 72.6% by weight of 141b has been established, within the accuracy of the boiling point determination procedure, as the true binary azeotrope with a boiling point of about 29.8° C.

Another useful mixture is an azeotrope-like composition consisting essentially of from 8 to 19 % by weight of n-pentane and from 81 to 92 % by weight of 2,2-dichloro-1,1,1-trifluoroethane. The n-pentane used can be of normal commercial purity which typically contains at least 95% n-pentane. The present mixture of 8 to 19% n-pentane and 81 to 92% 123 are azeotropic in nature in that compositions within this range exhibit a substantially constant boiling point. Being substantially constant boiling, the mixture does not tend to fractionate to any great extent upon evaporation. After evaporation, only a small difference exists between the composition of the vapor phase and the composition of the initial liquid phase. This difference is so small that the compositions of the vapor and liquid phases are considered substantially identical. Accordingly, any mixture within the above noted range exhibits properties which are characteristic of a true binary azeotrope. Compositions consisting essentially of from 10 to 16% by weight n-pentane and 84 to 90% by weight of 123 have been found to exhibit particularly satisfactory performance. The composition consisting of 13.8% by weight of n-pentane and 86.2% by weight of 123 has been established, within the accuracy of the boiling point determination procedure, as the true binary azeotrope with a boiling point of about 26° C.

The polyols, isocyanates, catalysts, and foam stabilizers useful herein and the various methods of combining them to produce closed cell, rigid foams are generally known in the art.

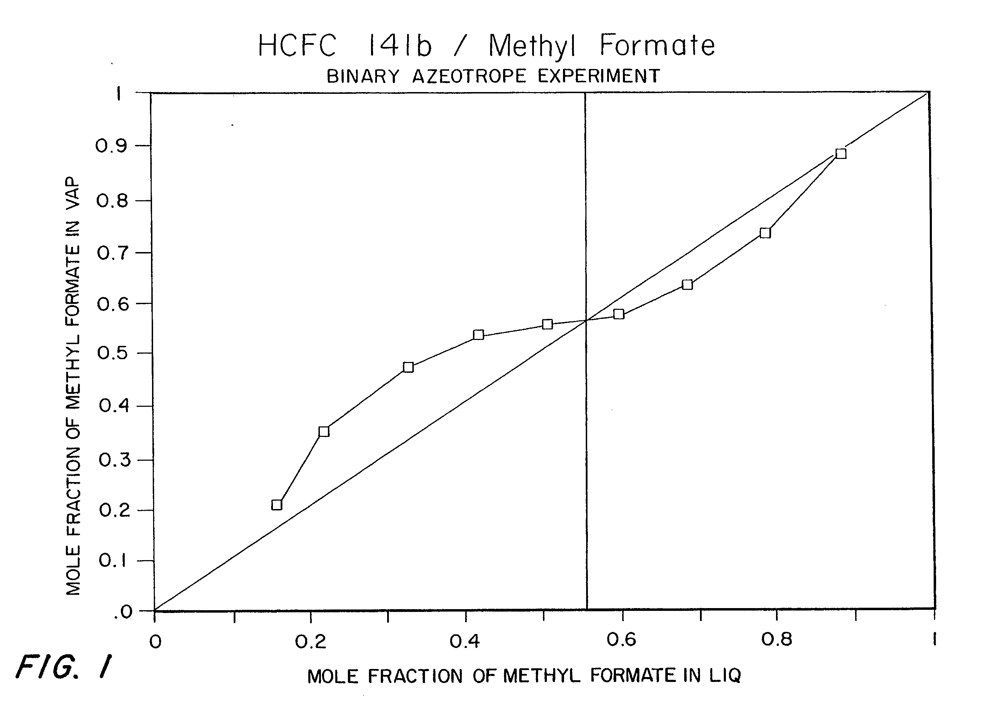

Figure 1 shows a graph plotting the mole fraction of methyl formate in the liquid phase versus the mole fraction of methyl formate in the vapor phase of a mixture with 141b refluxing at steady state at 1 atmosphere.

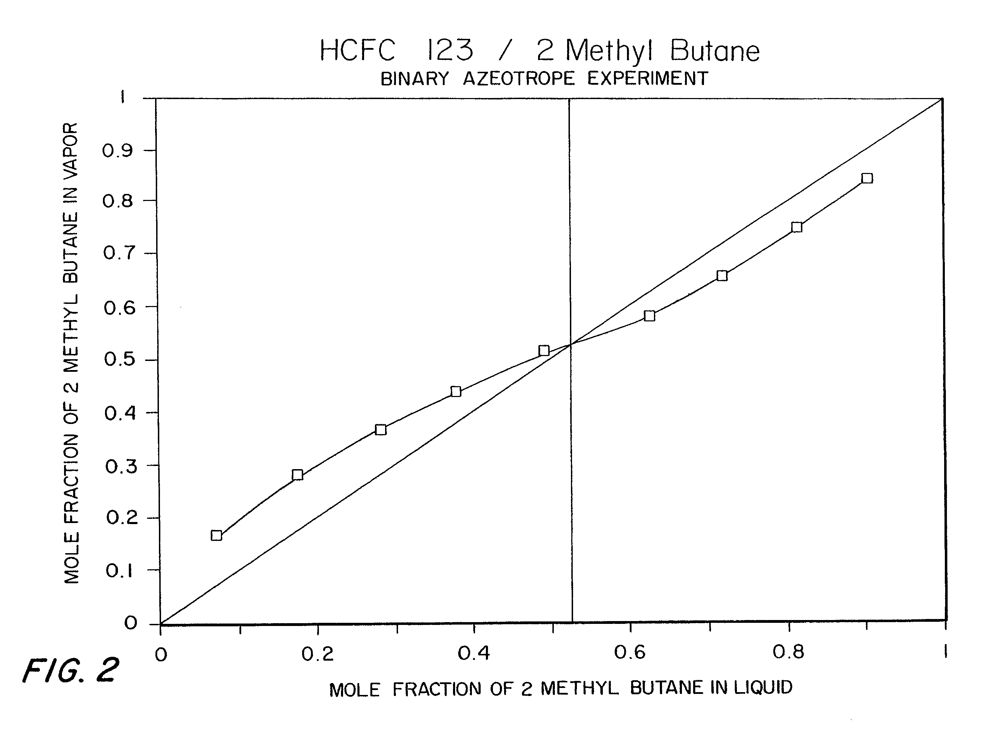

Figure 2 shows a graph plotting the mole fraction of 2-methyl-butane in the liquid phase versus the mole fraction of 2-methylbutane in the vapor phase of a mixture with 123 refluxing at steady state at 1 atmosphere.

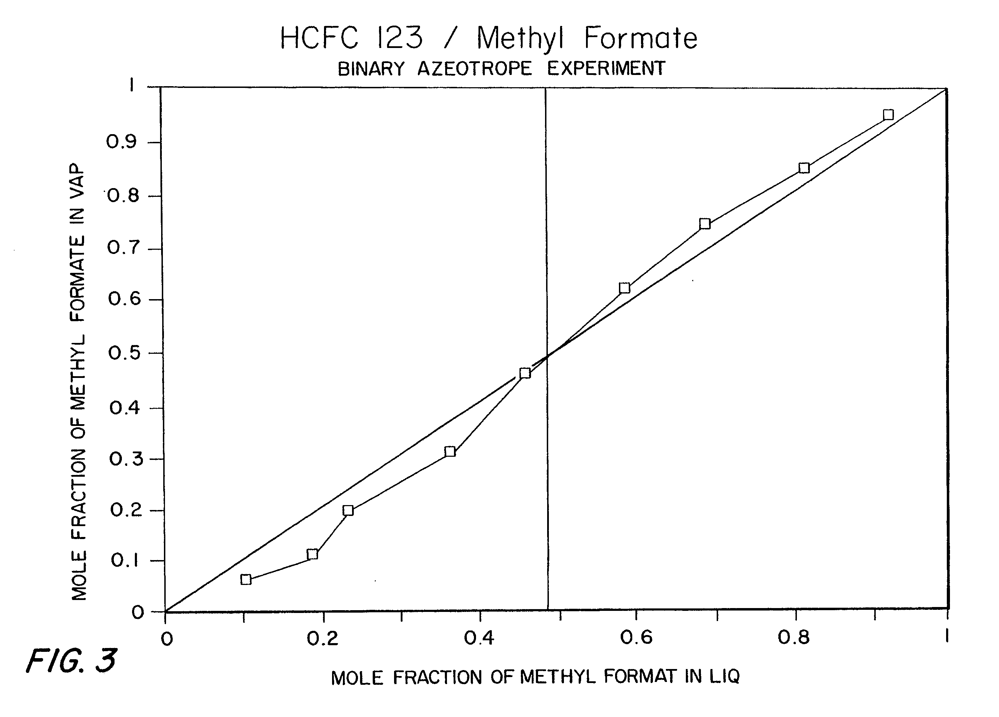

Figure 3 shows a graph plotting the mole fraction of methyl formate in the liquid phase versus the mole fraction of methyl formate in the vapor phase of a mixture with 123 refluxing at steady state at 1 atmosphere.

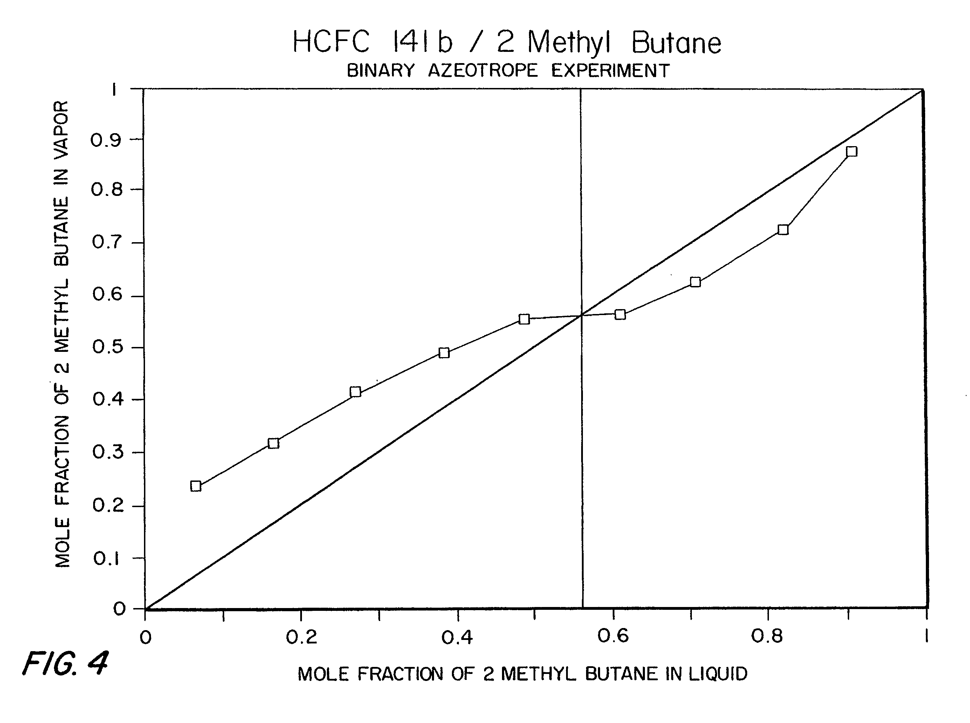

Figure 4 shows a graph plotting the mole fraction of 2-methylbutane in the liquid phase versus the mole fraction of 2-methylbutane in the vapor phase of a mixture with 141b refluxing at steady state at 1 atmosphere.

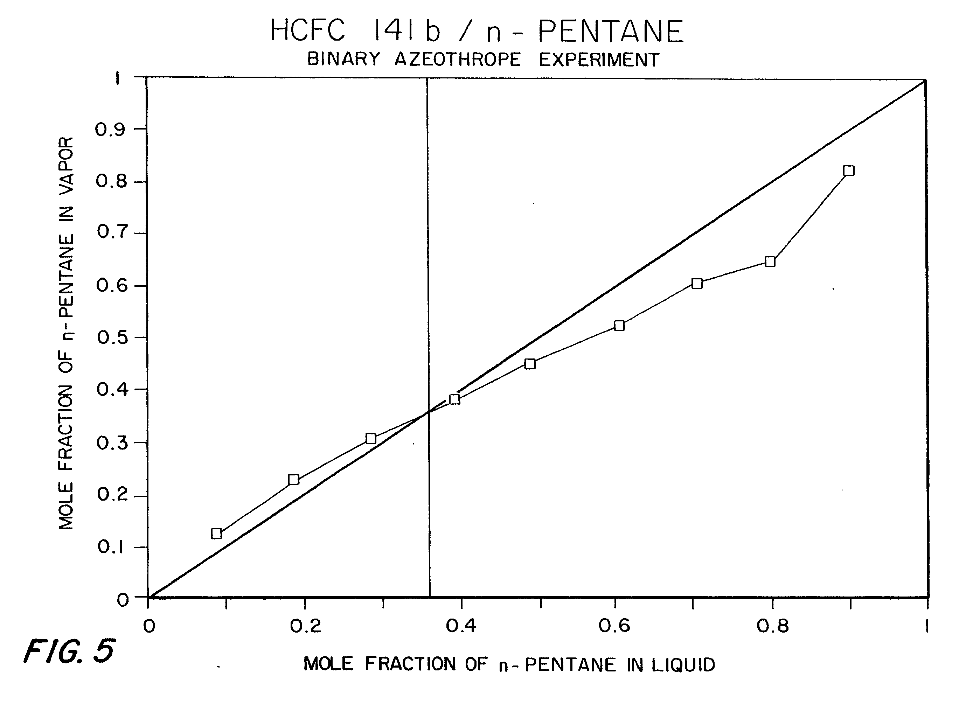

Figure 5 shows a graph plotting the mole fraction of n-pentane in the liquid phase versus the mole fraction of n-pentane in the vapor phase of a mixture with 141b refluxing at steady state at 1 atmosphere.

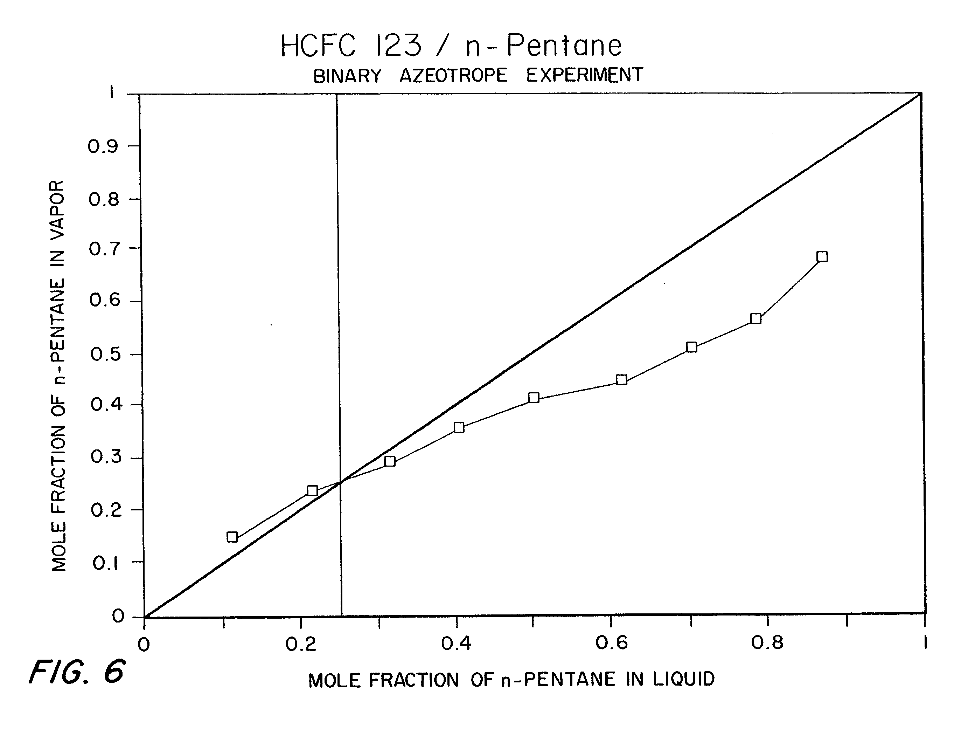

Figure 6 shows a graph plotting the mole fraction of n-pentane in the liquid phase versus the mole fraction of n-pentane in the vapor phase of a mixture with 123 refluxing at steady state at 1 atmosphere.

The various mole fractions shown in the drawings were obtained by gas chromotography and were adjusted to be quantitative by using a calibration curve as described below. The point at which this mole fraction curve crosses the line with slope 1 and intercept 0 is, by definition of an azeotrope, the true binary azeotropic composition.

A series of blends were prepared from 0 to 100 mole percent of either the methyl formate or the hydrocarbon in 10% increments. First, each blend was injected into a Perkin-Elmer Gas Chromatograph ("GC") to establish a correlation between relative peak areas versus actual molar concentrations. This procedure was done by making duplicate blends and measuring each blend twice. This established the calibration curve as well as a 95% confidence interval which was used to establish the error about the expected azeotropic composition. Secondly, each blend was gently heated in a distillation pot and refluxed for 10 minutes in the apparatus described above. The reflux condenser was kept at 10°C and was open to the atmosphere through a drying tube. Once steady state was achieved, samples of the liquid and vapor were taken through the sample ports in the apparatus, with the liquid samples being taken from the distillation pot and the vapor samples taken at the base of the the condenser. Liquid and vapor temperatures were also taken from the pot and from a point between the pot and the condenser and were recorded. Duplicate samples were injected into the GC and the relative peak areas recorded. These relative peak areas were converted to mole fractions using the calibration curve. The data was plotted with the resultant graph being shown in the drawing. An azeotrope is defined as the mixture of liquids where, at the boiling point, the concentration of the components is the same in the liquid and vapor phases. Therefore, the point at which the mole fraction plot crosses the line of slope 1 and intercept 0 is the expected azeotropic composition.

The azeotropic compositions described herein are also suitable for solvent cleaning applications.

The invention is further illustrated but is not intended to be limited by the following examples in which all parts and percentages are by weight unless otherwise specified.

## EXAMPLES

In the examples which follow, the following materials were used:

| | |
|---|---|
| POLYOL A: | a 460 OH number polyol prepared by sequentially reacting 1 mole of an 80/20 mixture of 2,4- and 2,6-toluene diamine with about 3.7 moles of ethylene oxide and then about 3.3 moles of propylene oxide. |
| POLYOL B: | a 395 OH number polyol prepared by sequentially reacting 1 mole of a mixture of 2,3- and 3,4-toluene diamine with about 3.5 moles of ethylene oxide and then with about 4.5 moles of propylene oxide. |
| POLYOL C: | Stepanol PS-2502, a 250 OH number aromatic polyester polyol commercially available from Stepan Company. |
| HCFC-123: | 1,1-dichloro-2,2,2-trifluoroethane. |
| HCFC-141b: | 1,1-dichloro-1-fluoroethane. |
| 2-MB: | 2-methylbutane. |
| n-P: | n-pentane. |
| MF: | methyl formate. |
| L-5440: | a polyalkyleneoxidedimethylsiloxane copolymer, commercially available from Union Carbide. |
| PMDTA: | pentamethyldiethylenetriamine. |
| K-15: | Dabco K-15 catalyst, a potassium based catalyst commercially available from Air Products. |
| TMR-30: | Dabco TMR-30 catalyst, an amine catalyst commercially available from Air Products. |
| DC-193: | a siloxane surfactant commercially available from Dow Corning Corporation. |
| TMEDA: | tetramethylethylenediamine. |
| ISO A: | Mondur MR isocyanate, a commercially available polymethylene polyphenyl polyisocyanate from Mobay Corporation, having an NCO content of about 32%. |
| ISO B: | Mondur 489 isocyanate, a commercially available polymethylene polyphenyl polyisocyanate from Mobay Corporation, having an NCO content of about 31%. |

In the examples, the HCFC-123 and HCFC-141b were first mixed with either the methyl formate or the hydrocarbon noted. The ingredients listed in the Tables under B-side were then blended. The isocyanate was then mixed in a mixing vessel using an air stirrer. After the mix times noted in the Tables, the reaction mixtures were poured into a polyethylene lined 10½" × 10½" × 2½" cardboard box. The cream times, gel times, densities and K-factors of the systems were as reported in the Tables. In the Tables, Table 2 represents isocyanurate group containing foams. Finally, Examples 1, 4, 7, 10, 19, 22, 24, 26 and 29 were comparative examples.

## TABLE 1

| B-SIDE | 1 | 2 | 3 | 4 | 5 | 6 |
|---|---|---|---|---|---|---|
| POLYOL A,pbw | 33.5 | 33.5 | 33.5 | 36.4 | 36.4 | 36.4 |
| POLYOL B,pbw | 33.5 | 33.5 | 33.5 | 36.4 | 36.4 | 36.4 |
| L-5440,pbw | 1.5 | 1.5 | 1.5 | 1.5 | 1.5 | 1.5 |
| PMTDA,pbw | 2.2 | 2.2 | 2.2 | 2.2 | 2.2 | 2.2 |
| TMEDA,pbw | 1.1 | 1.1 | 1.1 | 1.1 | 1.1 | 1.1 |
| HCFC-123,pbw | 28.2 | 22.38 | 22.38 | -- | -- | -- |
| HCFC-141b,pbw | -- | -- | -- | 22.4 | 18.83 | 18.83 |
| 2-MB,pbw | -- | 2.49 | -- | -- | 2.09 | -- |
| n-P,pbw | -- | -- | 2.49 | -- | -- | 2.09 |

| A-SIDE | | | | | | |
|---|---|---|---|---|---|---|
| ISO-A,pbw | 70.0 | 70.0 | 70.0 | 76.0 | 76.0 | 76.0 |

| RESULTS | | | | | | |
|---|---|---|---|---|---|---|
| Mix time,sec. | 4 | 4 | 4 | 4 | 4 | 4 |
| Cream time,sec. | 14 | 11 | 12 | 10 | 9 | 9 |
| Gel time, sec. | 39 | 37 | 39 | 33 | 33 | 33 |
| Density,pcf. | 1.87 | 1.84 | 1.87 | 1.84 | 1.81 | 1.80 |
| K-factor (BTU-in hr-ft2) | 0.120 | 0.126 | 0.127 | 0.122 | 0.127 | 0.128 |

TABLE 2

| B-SIDE | 7 | 8 | 9 | 10 | 11 | 12 |
|---|---|---|---|---|---|---|
| POLYOL C,pbw | 100.0 | 100.0 | 100.0 | 100.0 | 100.0 | 100.0 |
| K-15,pbw | 3.0 | 3.0 | 3.0 | 3.0 | 3.0 | 3.0 |
| TMR-30,pbw | 0.6 | 0.6 | 0.6 | 0.6 | 0.6 | 0.6 |
| DC-193,pbw | 1.5 | 1.5 | 1.5 | 1.5 | 1.5 | 1.5 |
| HCFC-123,pbw | 45.4 | 36.09 | 36.09 | -- | -- | -- |
| HCFC-141b,pbw | -- | -- | -- | 33.4 | 28.08 | 28.08 |
| 2-MB,pbw | -- | 4.01 | -- | -- | 3.12 | -- |
| n-P,pbw | -- | -- | 4.01 | -- | -- | 3.12 |

| A-SIDE | | | | | | |
|---|---|---|---|---|---|---|
| ISO-B,pbw | 158.5 | 158.5 | 158.5 | 158.5 | 158.5 | 158.5 |

| RESULTS | | | | | | |
|---|---|---|---|---|---|---|
| Mix time,sec. | 4 | 4 | 4 | 4 | 4 | 4 |
| Cream time,sec. | 21 | 17 | 20 | 16 | 16 | 16 |
| Gel time, sec. | 35 | 36 | 35 | 30 | 31 | 30 |
| Density,pcf. | 1.97 | 1.94 | 1.95 | 1.88 | 1.82 | 1.82 |
| K-factor (BTU-in hr-ft2) | 0.130 | 0.128 | 0.131 | 0.133 | 0.134 | 0.134 |

## TABLE 3

| B-SIDE | 13 | 14 | 15 | 16 |
|---|---|---|---|---|
| POLYOL A,pbw | 33.5 | 36.4 | 33.5 | 36.4 |
| POLYOL B,pbw | 33.5 | 36.4 | 33.5 | 36.4 |
| L-5440,pbw | 1.5 | 1.5 | 1.5 | 1.5 |
| PMTDA,pbw | 2.2 | 2.2 | 2.2 | 2.2 |
| TMEDA,pbw | 1.1 | 1.1 | 1.1 | 1.1 |
| HCFC-123,pbw | 17.74 | -- | 24.39 | -- |
| HCFC-141b,pbw | -- | 15.59 | -- | 16.44 |
| 2-MB,pbw | 10.46 | 6.81 | -- | -- |
| n-P,pbw | -- | -- | 3.81 | 5.96 |

| A-SIDE | | | | |
|---|---|---|---|---|
| ISO-A,pbw | 70.0 | 76.0 | 70.0 | 76.0 |

| RESULTS | | | | |
|---|---|---|---|---|
| Mix time,sec. | 5 | 5 | 5 | 5 |
| Cream time,sec. | 11 | 9 | 13 | 7 |
| Gel time, sec. | 38 | 37 | 38 | 29 |
| Density,pcf. | 1.34 | 1.27 | 1.69 | 1.63 |
| K-factor (BTU-in hr-ft2) | 0.152 | 0.162 | 0.130 | 0.132 |

## TABLE 4

| B-SIDE | 17 | 18 |
|---|---|---|
| POLYOL A,pbw | 36.4 | 36.4 |
| POLYOL B,pbw | 36.4 | 36.4 |
| L-5440,pbw | 1.5 | 1.5 |
| PMTDA,pbw | 2.2 | 2.2 |
| TMEDA,pbw | 1.1 | 1.1 |
| HCFC-141b,pbw | 22.4 | 9.46 |
| MF,pbw | -- | 6.2 |
| A-SIDE | | |
| ISO-A,pbw | 76.0 | 76.0 |
| RESULTS | | |
| Mix time,sec. | 4 | 4 |
| Cream time,sec. | 9 | 9 |
| Gel time, sec. | 31 | 28 |
| Density,pcf. | 1.89 | 2.03 |
| K-factor (BTU-in hr-ft2) | 0.122 | 0.131 |

TABLE 5

| B-SIDE | 19 | 20 | 21 |
|---|---|---|---|
| POLYOL A,pbw | 33.5 | 33.5 | 33.5 |
| POLYOL B,pbw | 33.5 | 33.5 | 33.5 |
| L-5440,pbw | 1.5 | 1.5 | 1.5 |
| PMTDA,pbw | 2.2 | 2.2 | 2.2 |
| TMEDA,pbw | 1.1 | 1.1 | 1.1 |
| HCFC-123,pbw | 28.2 | 17.74 | 18.52 |
| 2-MB,pbw | -- | 10.46 | 9.58 |
| A-SIDE | | | |
| ISO-A,pbw | 70.0 | 70.0 | 70.1 |
| RESULTS | | | |
| Mix time,sec. | 5 | 5 | 4 |
| Cream time,sec. | 10 | 11 | 8 |
| Gel time, sec. | 37 | 38 | 46 |
| Density,pcf. | 1.85 | 1.34 | 1.43 |
| K-factor (BTU-in hr-ft2) | 0.123 | 0.152 | 0.145 |

TABLE 6

| B-SIDE | 22 | 23 |
|---|---|---|
| POLYOL A,pbw | 33.5 | 33.5 |
| POLYOL B,pbw | 33.5 | 33.5 |
| L-5440,pbw | 1.5 | 1.5 |
| PMTDA,pbw | 2.2 | 2.2 |
| TMEDA,pbw | 1.1 | 1.1 |
| HCFC-I23,pbw | 28.2 | 13.68 |
| MF,pbw | -- | 5.08 |
| A-SIDE | | |
| ISO-A,pbw | 70.0 | 70.0 |
| RESULTS | | |
| Mix time,sec. | 4 | 4 |
| Cream time,sec. | 14 | 8 |
| Gel time, sec. | 39 | 30 |
| Density,pcf. | 1.92 | 2.01 |
| K-factor (BTU-in hr-ft2) | 0.122 | 0.128 |

TABLE 7

| B-SIDE | 24 | 25 |
|---|---|---|
| POLYOL A,pbw | 33.5 | 33.5 |
| POLYOL B,pbw | 33.5 | 33.5 |
| L-5440,pbw | 1.5 | 1.5 |
| PMTDA,pbw | 2.2 | 2.2 |
| TMEDA,pbw | 1.1 | 1.1 |
| HCFC-141b,pbw | 22.4 | 15.59 |
| 2-MB,pbw | -- | 6.81 |
| A-SIDE | | |
| ISO-A,pbw | 70.0 | 70.0 |
| RESULTS | | |
| Mix time,sec. | 5 | 5 |
| Cream time,sec. | 12 | 9 |
| Gel time, sec. | 29 | 37 |
| Density,pcf. | 1.77 | 1.27 |
| K-factor (BTU-in hr-ft2) | 0.125 | 0.162 |

TABLE 8

| B-SIDE | 26 | 27 | 28 |
|---|---|---|---|
| POLYOL A,pbw | 36.4 | 36.4 | 36.4 |
| POLYOL B,pbw | 36.4 | 36.4 | 36.4 |
| L-5440,pbw | 1.5 | 1.5 | 1.5 |
| PMTDA,pbw | 2.2 | 2.2 | 2.2 |
| TMEDA,pbw | 1.1 | 1.1 | 1.1 |
| HCFC-141b,pbw | 22.4 | 16.44 | 16.26 |
| n-P,pbw | -- | 5.96 | 6.14 |
| A-SIDE | | | |
| ISO-A,pbw | 76.0 | 76.0 | 76.0 |
| RESULTS | | | |
| Mix time,sec. | 5 | 5 | 4 |
| Cream time,sec. | 9 | 7 | 8 |
| Gel time, sec. | 29 | 29 | 35 |
| Density,pcf. | 1.80 | 1.63 | 1.63 |
| K-factor (BTU-in hr-ft2) | 0.117 | 0.132 | 0.136 |

## TABLE 9

| B-SIDE | 29 | 30 |
|---|---|---|
| POLYOL A,pbw | 33.5 | 33.5 |
| POLYOL B,pbw | 33.5 | 33.5 |
| L-5440,pbw | 1.5 | 1.5 |
| PMTDA,pbw | 2.2 | 2.2 |
| TMEDA,pbw | 1.1 | 1.1 |
| HCFC-123,pbw | 28.2 | 24.39 |
| n-P,pbw | -- | 3.81 |
| **A-SIDE** | | |
| ISO-A,pbw | 70.0 | 70.0 |
| **RESULTS** | | |
| Mix time,sec. | 5 | 5 |
| Cream time,sec. | 14 | 13 |
| Gel time, sec. | 38 | 38 |
| Density,pcf. | 1.87 | 1.69 |
| K-factor (BTU-in hr-ft2) | 0.116 | 0.130 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. In a process for the preparation of closed cell, rigid foams by reacting a) a polyol component having a hydroxyl number of from about 200 to about 650, and b) an organic polyisocyanate, in the presence of c) a catalyst, d) a foam stabilizer, and e) a blowing agent, the improvement wherein the blowing agent comprises a mixture selected from the group consisting of:

    (A) a mixture of i) from 30 to 95 percent by weight of a hydrochlorofluorocarbon selected from the group consisting of 2,2-dichlor-1,1,1-trifluoroethane and 1,1-dichloro-1-fluoroethane and ii) from 5 to 70 percent by weight of a hydrocarbon selected from the group consisting of n-pentane, 2-methylbutane, hexane, the position of isomers of hexane and mixtures thereof,

    (B) a mixture of from 35 to 45 % by weight of methyl formate and from 55 to 65 % by weight of 1,1-dichloro-1-fluoroethane,

    (C) a mixture of from 30 to 40% by weight of 2-methylbutane and from 60 to 70 % by weight of 2,2-dichloro-1,1,1-trifluoroethane,

    (D) a mixture of from 22 to 32% by weight of methyl formate and from 68 to 78 % by weight of 2,2-dichloro-1,1,1-trifluoroethane,

    (E) a mixture of from 25 to 35% by weight of 2-methylbutane and from 65 to 75 % by weight of 1,1-dichloro-1-fluoroethane,

    (F) a mixture of from 22 to 32% by weight of n-pentane and from 68 to 78 % by weight of 1,1-dichloro-1-fluoroethane, and

    (G) a mixture of from 8 to 19 % by weight of n-pentane and from 81 to 92 % by weight of 2,2-dichloro-1,1,1-trifluoroethane.

2.  The process of Claim 1, wherein said blowing agent consists essentially of from 8 to 19 % by weight of n-pentane and from 81 to 92 % by weight of 2,2-dichloro-1,1,1-trifluoroethane.

3.  The process of Claim 2, wherein said blowing agent consists essentially of 13.8 % by weight of n-pentane and 86.2 % by weight of 2,2-dichloro-1,1,1-trifluoroethane.

4.  The process of Claim 1, wherein said blowing agent consists essentially of from 25 to 30% by weight of n-pentane and from 70 to 75 % by weight of 1,1-dichloro-1-fluoroethane.

5.  The process of Claim 4, wherein said blowing agent consists essentially of 27.4 % by weight of n-pentane and 72.6 % by weight of 1,1-dichloro-1-fluoroethane.

6.  The process of Claim 1, wherein said blowing agent consists essentially of from 27 to 33% by weight of 2-methylbutane and from 67 to 73 % by weight of 1,1-dichloro-1-fluoroethane.

7.  The process of Claim 1, wherein said blowing agent consists essentially of from 37 to 42 % by weight of methyl formate and from 58 to 63 % by weight of 1,1-dichloro-1-fluoroethane.

8.  The process of Claim 7, wherein said blowing agent consists essentially of 39.6 % by weight of methyl formate and 60.4 % by weight of 1,1-dichloro-1-fluoroethane.

9.  The process of Claim 1, wherein said blowing agent comprises a mixture of i) from 60 to 90 percent by weight of said hydrochlorofluorocarbon and ii) from 10 to 40 percent by weight of said hydrocarbon.

10. The process of Claim 9 wherein said hydrochlorofluorocarbon is 2,2-dichlor-1,1,1-trifluoroethane and said hydrocarbon is n-pentane.

HCFC 141b / Methyl Formate
BINARY AZEOTROPE EXPERIMENT

MOLE FRACTION OF METHYL FORMATE IN LIQ

MOLE FRACTION OF METHYL FORMATE IN VAP

FIG. 1

HCFC 123 / 2 Methyl Butane
BINARY AZEOTROPE EXPERIMENT

MOLE FRACTION OF 2 METHYL BUTANE IN LIQUID

MOLE FRACTION OF 2 METHYL BUTANE IN VAPOR

FIG. 2

# HCFC 123 / Methyl Formate
## BINARY AZEOTROPE EXPERIMENT

*FIG. 3*

MOLE FRACTION OF METHYL FORMATE IN VAP

MOLE FRACTION OF METHYL FORMAT IN LIQ

EP 0 450 422 A2

## HCFC 141b / 2 Methyl Butane
### BINARY AZEOTROPE EXPERIMENT

*FIG. 4*

MOLE FRACTION OF 2 METHYL BUTANE IN VAPOR

MOLE FRACTION OF 2 METHYL BUTANE IN LIQUID

EP 0 450 422 A2

# HCFC 141 b / n - PENTANE
## BINARY AZEOTHROPE EXPERIMENT

FIG. 5

MOLE FRACTION OF n - PENTANE IN VAPOR

MOLE FRACTION OF n - PENTANE IN LIQUID

EP 0 450 422 A2

HCFC 123 / n-Pentane
BINARY AZEOTROPE EXPERIMENT

FIG. 6

MOLE FRACTION OF n-PENTANE IN LIQUID

MOLE FRACTION OF n-PENTANE IN VAPOR

EP 0 450 422 A2